# EUROPEAN PATENT SPECIFICATION

(11) **EP 2 423 011 B1**
(45) Date of publication and mention of the grant of the patent: **16.10.2013**
(21) Application number: 11177480.8
(22) Date of filing: 12.08.2011
(51) Int. Cl.: B60G 21/02, B60G 21/04, B62D 33/06, B60G 99/00

(54) **Moving mechanism**
Bewegungsmechanismus
Mécanisme mobile

(30) Priority: 31.08.2010 JP 2010193063
(43) Date of publication of application: 29.02.2012
(73) Proprietor: Hitachi, Ltd., Tokyo 100-8280 (JP)
(72) Inventor: Amino, Azusa, Tokyo, 100-8220 (JP); Ono, Yukihiko, Tokyo, 100-8220 (JP)
(74) Representative: Beetz & Partner

(56) References cited:
- WO-A1-98/28160
- DE-U1-202009 015 735
- US-A- 5 555 501

## Description

### BACKGROUND OF THE INVENTION

The present invention relates to suspensions of a moving mechanism for running or traveling on a rough road having unevenness on wheels, and in particular, it relates to the mechanism for traveling on it while keeping a body thereof horizontal or in parallel with a ground surface.

As a technology for traveling with stability, while absorbing such unevenness on the traveling road and/or an inclination thereof is already known, for example, in the following Patent Document 1 that will be described below.

In the method disclosed in the Patent Document 1, there is disclosed a moving mechanism for controlling each of cylinders, appropriately, depending on the inclination of a car body, while suspending each of the wheels from the car body through those cylinders, which are expansible.

Utility model DE 20 2009 015 735 U1 relates to a vehicle with a wagon body and a running gear on which the wagon body is supported, wherein the wagon body and the running gear define a vehicle longitudinal direction, a vehicle transverse direction and a vehicle height direction. A tilting mechanism is arranged between the wagon body and the running gear, which is designed to impose, during a transverse displacement in the vehicle transverse direction, upon the wagon body a rolling motion about a rolling axis parallel to the vehicle longitudinal direction. The tilting mechanism comprises a transverse decoupling device, which is designed to reduce the stiffness of the tilting mechanism against a pure transverse displacement of the wagon body with respect to the running gear.

[Patent Document 1] Japanese Patent Laying-Open No. He 9-109644 (1997).

### BRIEF SUMMARY OF THE INVENTION

The problem to be solved by the present invention is to absorb disturbances from the unevenness on the road surface, in particular, in the moving mechanism for moving, connecting wheels on a frame of the car body (hereinafter, "a car frame"), and thereby to enable a stable running while maintaining the car frame to be in parallel with, even on an inclined road. For this purpose, there can be considered a means, i.e., mounting the suspensions thereon; however, with this, though it is possible to absorb the unevenness on the road by means of the suspensions, but in case when running on the inclined road, the car frame is inclined down to a lower side of the inclined road, and therefore it is impossible to keep the car frame horizontal or in parallel with. Also, in case where the distance between the wheels is small, which are provided in the front and the rear or on the left and the right, an amount of sinking or subsidence of the suspension becomes large, either in the front or the rear, or on the left or the right, due to a centrifugal force during a cornering operation, or the disturbances, such as, the unevenness and the inclination of the road surface, and thereby bringing about a problem of increasing a possibility of falling down and losing the stability.

In accordance with the method disclosed in the Patent Document 1, while detecting a pitch angel and a roll angle of the car body, by means of sensors, actuators of the suspensions are driven, which are attached at the four corners of the car body, and thereby controlling the car body to be in parallel with. However, a driving force of the actuator must be generated, always, even when running on a flat road, and this brings about a problem of enlarging a consumption of electric power. Further, the actuator must be provided for each of the suspensions, and this also brings about a problem of increasing a number of parts and the weight thereof.

The above problems are achieved by the invention as set out by the appended claims.

Although the present application includes plural numbers of means for solving the problems mentioned above; however, if listing up one example, there is provided a moving mechanism, comprising: a car frame being, which is supported by three or more numbers of wheels, to move with driving of a part or all of said wheels; suspensions, each of which is provided between said car frame and each of said wheels; a table being able to incline into a predetermined direction, to which said suspensions are suspended; and an actuator having an output for inclining said table, wherein an inclination detecting means, which is mounted on said car frame, detects an inclination angle and an inclination angular velocity of said moving mechanism with respect of a direction of gravity, and a control instruction value outputting means controls said actuator, upon basis of information thereof, in such that it follows a target inclination angle and a target inclination angular velocity of said moving mechanism.

According to the present invention, with the moving mechanism connecting wheels to the car frame and for moving, it is possible to travel with stability while keeping the car frame to be in parallel with, even on the inclined road surface.

### BRIEF DESCRIPTION OF THE SEVERAL VIEWS OF THE DRAWING

Those and other objects, features and advantages of the present invention will become more readily apparent from the following detailed description when taken in conjunction with the accompanying drawings wherein:
Fig. 1 shows an example of the entire structural view of the moving mechanism, according to an embodiment 1 of the present invention;
Fig. 2 shows an example of a block diagram for showing an example of a diagram for showing a pitch direction operation of a suspension of the moving mechanism, according to the embodiment 1 of the present invention;

Fig. 3 shows an example of a block diagram for showing an example of the diagram for showing a roll direction operation of the suspension of the moving mechanism, according to the embodiment 1 of the present invention;
Fig. 4 shows a control block diagram for the suspension of the moving mechanism, according to the present invention;
Fig. 5 shows an example of the view for showing a control flowchart for the moving mechanism, according to the present invention;
Fig. 6 shows an example of the view for showing an actual implementation of the suspension of the moving mechanism, according to a second embodiment of the present invention; and
Fig. 7 shows an example of the view for showing the actual implementation of the suspension of the moving mechanism, according to the second embodiment of the present invention.

### DETAILED DESCRIPTION OF THE PREFERRED EMBODIMENTS

For solving the problem according to the present invention, for example, the moving mechanism according to the invention comprises a suspension between a car frame and wheels, and an actuator equipped with an output for expanding/contracting the suspension, wherein a control instruction value output means controls the actuator mentioned above, appropriately, following a target inclination angle and a target inclination angular velocity of a robot, upon basis of that information, an inclination angle and an inclination angular velocity of the moving mechanism, with respect to the direction of gravity, while detecting them by an inclination detector means, which is mounted on the car frame, and thereby reducing jolting and an inclination of the car body on a rough (uneven) road or an inclined road.

Also, for example, the moving mechanism according to the invention, being one of examples of implementation of the invention, comprises a swing arm, being rotatable only in a pitch direction, into which the car frame and the wheel are connected with, a table being able to incline in the pitch direction and also a roll direction, with respect to the car frame, i.e., in two degrees of freedom, a suspension, which is suspended to the table and connected with a part of the swing arm mentioned above, and an actuator being equipped with an output for inclining the table, wherein a control instruction value output means controls the actuator mentioned above, appropriately, following a target inclination angle and a target inclination angular velocity of a robot, upon basis of that information, an inclination angle and an inclination angular velocity of the moving mechanism, with respect to the direction of gravity, while detecting them by an inclination detector means, which is mounted on the car frame, and thereby reducing jolting and an inclination of the car body on a rough (uneven) road or an inclined road.

Also, for example, the moving mechanism according to the invention, being one of the examples of implementation of the invention, comprises a swing arm, being rotatable only in the pitch direction, into which the car frame and the wheel are connected with, a table being able to incline in the roll direction with respect to the car frame, a suspension, which is suspended to the table and connected with a part of the swing arm, and an actuator being equipped with an output for inclining the table, wherein a control instruction value output means controls the actuator mentioned above, appropriately, following a target inclination angle and a target inclination angular velocity of a robot, upon basis of that information, an inclination angle and an inclination angular velocity of the moving mechanism, with respect to the direction of gravity, while detecting them by an inclination detector means, which is mounted on the car frame, and thereby reducing jolting and an inclination of the car body on a rough (uneven) road or an inclined road.

Also, for example, the moving mechanism according to the invention, being one of the examples of implementation of the invention, comprises a swing arm, being rotatable only in the pitch direction, into which the car frame and the wheel are connected with, a table being able to incline in the pitch direction with respect to the car frame, a suspension, which is suspended to the table and connected with a part of the swing arm, and an actuator being equipped with an output for inclining the table, wherein a control instruction value output means controls the actuator mentioned above, appropriately, following a target inclination angle and a target inclination angular velocity of a robot, upon basis of that information, an inclination angle and an inclination angular velocity of the moving mechanism, with respect to the direction of gravity, while detecting them by an inclination detector means, which is mounted on the car frame, and thereby reducing jolting and an inclination of the car body on a rough (uneven) road or an inclined road.

And, for example, with the moving mechanism connecting the wheels to the car frame and for moving, disturbances from the unevenness on the road surface can be absorbed, and therefore it is possible to travel with stability, while keeping the car frame to be in parallel with, even on an inclined surface of the road. Also, for example, the suspension for each wheel is suspended by the table having two degrees of freedom, and the position of an axis of the two degrees of freedom of the table is set at a place where powers are balanced in the front and the rear and on the left and the right, and thereby enabling to suppress electric power consumption on a flat road.

Hereinafter, explanation will be given on the embodiments of the present invention, by referring to drawings attached herewith.

### <Embodiment 1>

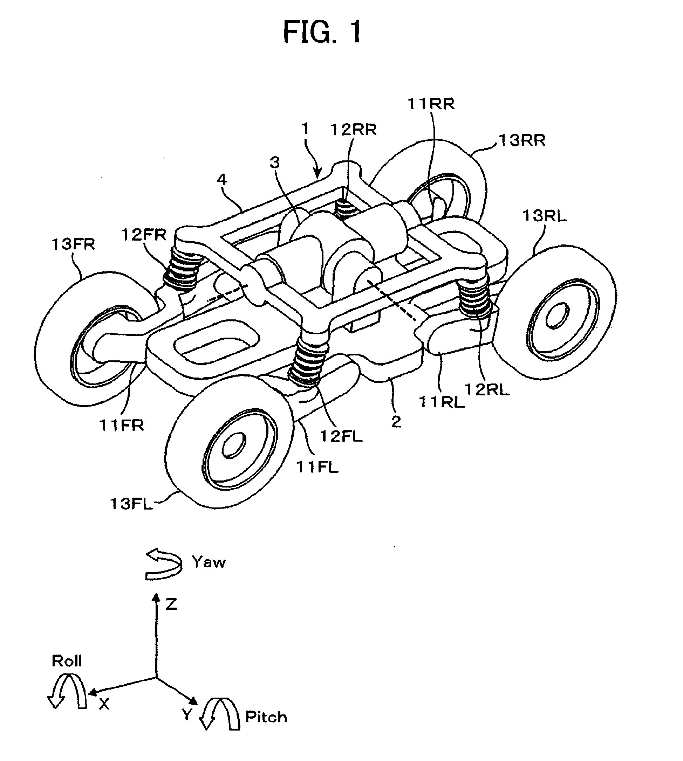

As is shown in Fig. 1, the moving mechanism 1 according to the present embodiment comprises four pieces of swing arms 11FL, 11FR, 11RL and 11RR, at four corners of a car frame 2, each being able to rotate only into the pitch direction, and wheels 13FL, 13FR, 13RL and 13RR, at one ends of the swing arms 11FL, 11FR, 11RL and 11RR in the longitudinal direction thereof, respectively. In a middle of the longitudinal direction of the swing arms 11FL, 11FR, 11RL or 11RR are connected suspensions 12FL, 12FR, 12RL and 12RR, respectively, each having degrees of freedom in the pitch/roll directions, and the other ends of the suspensions 12FL, 12FR, 12RL and 12RR in the longitudinal direction thereof are suspended at the four corners of the table 4, each having the degrees of freedom, in both the pitch and roll directions. The table 4 is attached around a central portion of the car frame 2, to be able to jolt in both the pitch and roll directions, by an actuator 3 of 2-degrees of freedom, at the position being nearly symmetric with, in the front and the rear and on the left and the right. Herein, surrounding an axis in the direction of movement of the car frame is called the roll direction (presented by an arrow of "Roll" in Fig. 1), while surrounding an axis, being perpendicular to the axis in the direction of movement and in parallel with the horizontal plane, is called the pitch direction (presented by an arrow of "Pitch" in Fig. 1), and hereinafter, it is assumed that they may be used if there is no expression. The actuator 3 of 2-degrees of freedom can rotate in the pitch/roll directions, and has a motive power source (for example, a motor), a decelerator and an angular detector (for example, a rotary encoder or a potentiometer) therein; thereby driving parts connected therewith.

Also, the suspending positions of the suspensions 12FL, 12FR, 12RL and 12RR on the table 4 are in a relationship of being nearly symmetric with respect to axial lines of the degrees of freedom of the pitch/roll, which the table 4 has with respect to the car frame 2.

Also, though not shown in the figure, on the car frame 2 is mounted an inclination sensor 14, for detecting an inclination angle and an angular velocity of the car frame 2 with respect to the direction of gravity.

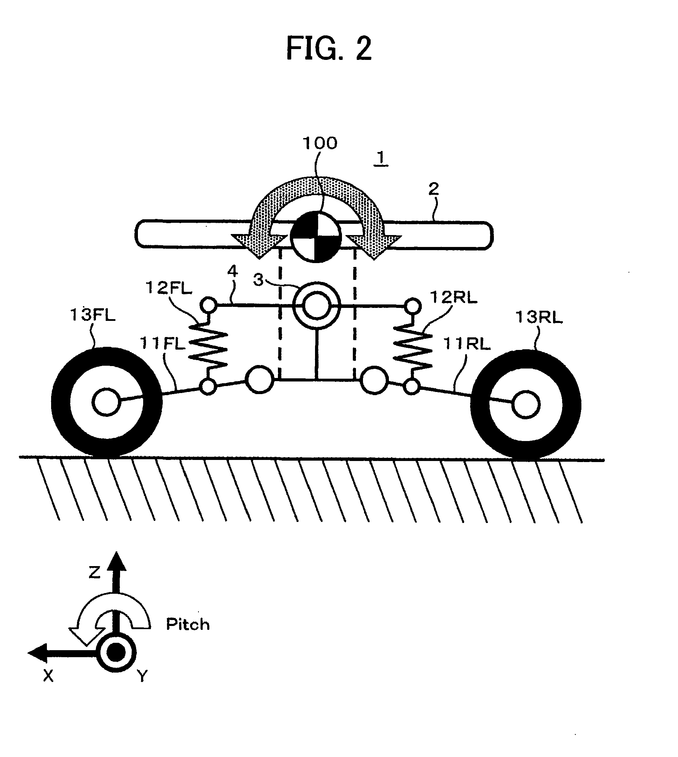

Fig. 2 shows an example of the case of applying the moving mechanism 1 into a robot as the moving mechanism thereof, and it is a block diagram for showing a movement of the suspension of the moving mechanism in the pitch direction.

The suspensions 12FL, 12FR, 12RL and 12RR are equal to each other in the constituent elements thereof, respectively, and the structures thereof are in symmetry with each other, with respect to an X-Z plane passing through the center of gravity 100; therefore, explanation will be given only about the suspensions 12FL and 12RL, hereinafter.

The suspensions 12FL and 12RL are connected, respectively, in a middle of the swing arms 11 FL and 11 RL, connecting between the wheels 13FL and 13RL and the car frame 2, to have the degrees of freedom in the pitch/roll directions, and the other ends of the suspensions 12FL and 12RL are suspended at the corners of the table 4 to have the degrees of freedom in the pitch/roll directions.

Herein, the actuator 3 of 2-degrees of freedom can output a power surrounding an axis of pitch and with this it inclines the table 4 in the pitch direction; thereby expanding/contracting the suspensions 12FL and 12RL.

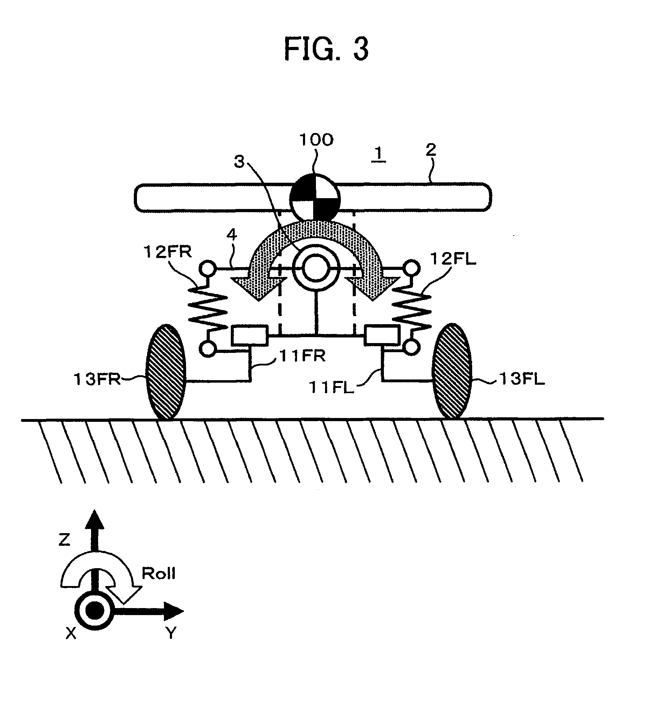

Fig. 3 also shows an example of the case of applying the moving mechanism 1 into the robot as the moving mechanism thereof, and it is a block diagram for showing a movement of the suspension of the moving mechanism in the roll direction.

The structures of the moving mechanism 1 are symmetric with respect to a Y-Z plane passing through the center of gravity 100; therefore, explanation will be given only about the suspensions 12FL and 12RL, hereinafter.

The suspensions 12FL and 12RL are connected, respectively, in a middle of the swing arms 11 FL and 11 RL, connecting between the wheels 13FL and 13RL and the car frame 2, to have the degrees of freedom in the pitch/roll directions, and the other ends of the suspensions 12FL and 12RL are suspended at the corners of the table 4 to have the degrees of freedom in the pitch/roll directions.

Herein, the actuator 3 of 2-degrees of freedom can output a power surrounding an axis of roll and it inclines the table 4 in the roll direction, and thereby expanding/contracting the suspensions 12FL and 12RL.

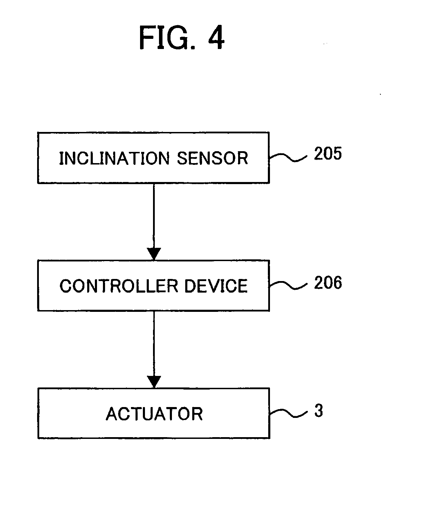

Fig. 4 is a control block diagram, according to the present embodiment. When the moving mechanism 1 shown in Fig. 1 travels on a road surface having unevenness thereon or a road surface being inclined, or when it receives a centrifugal force during in cornering, then vibration of the robot in the up/down direction can be absorbed by means of the suspensions 12FL, 12FR, 12RL and 12RR; however, if there is differences in an amount of sinking or subsidence between the suspensions 12FL and 12RL or the suspensions 12FR and 12RR in the front and the rear, or between the suspensions 12FL and 12FR or the suspensions 12RL and 12RR on the left and the right, the car frame 2 is inclined down to the side being large in the sinking, and due to forces restoring from it, the pitching/rolling are generated in the front and the rear and on the left and the right. The inclination sensor 205, being mounted on the car frame 2, detects the inclination angle and the angular velocity of the car frame 2 with respect to the direction of gravity thereof, and a controller device 206 controls the actuator 3 of 2-degrees of freedom, appropriately, so that the inclination and the angular velocity of the car frame 2 are coincident with target values thereof, upon basis of information detected by the inclination sensor 205.

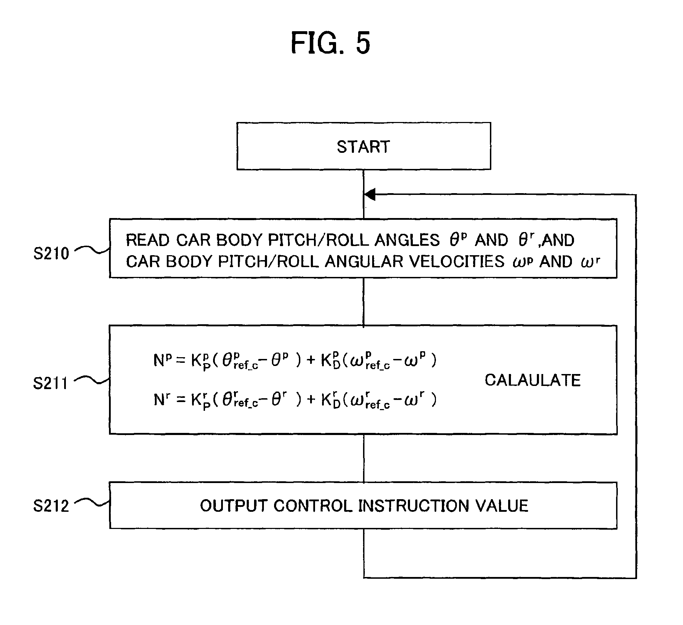

Fig. 5 is a view for showing a control flowchart of the robot, according to the present embodiment.

This calculation process is executed at a predetermined sampling time, i.e., every ΔT, when it "starts", and first of all in a step S210, car body pitch/roll angles θ^{p} and θ^{r} and car body pitch/roll angular velocities ω ^{p} and ω^{r} are read into, from the inclination sensor 205. Next, in a step S211, a multiplication, which is obtained by multiplying a predetermined control gain K^{p}ₚ or K^{r}ₚ on the difference between a car body pitch/roll target angel θ^{p}_{ref_c} or θ^{r}_{ref_c}, which is given in advance, and the car body roll angle θ^{p} or θ^{r} with, and also a multiplication, which is obtained by multiplying a predetermined control gain K^{p}_{D} or K^{r}_{D} on the difference between a car body pitch/roll target angular velocity ω^{p}_{ref_c} or ω^{r}ref_c, which is given in advance, and the car body roll angular velocity ω^{p} or ω^{r} are added with; thereby calculating the control torques N^{p} and N^{r}. Finally, in a step S212, the pitch control torque N^{p} and the roll control torque N^{r} are outputted to the actuator 3 of 2-degrees of freedom, as a control instruction value output.

As was mentioned above, according to the present embodiment, the inclination sensor 205, being an inclination detecting means, which is mounted on the car frame 2, detects the inclination angle and the angular velocity with respect to the direction of gravity, while inputting an addition of a torque for maintaining a predetermined neutrality and a predetermined control volume, which can be obtained from an inclination of an upper body and an angular velocity, and thereby reducing the pitching/rolling of the car body; i.e., enabling a stable running.

### <Embodiment 2>

Next, explanation will be given on the suspension of the moving mechanism according to an embodiment 2.

Depending on the use of the moving mechanism 1, the unevenness or the inclination of the road surface, on which the moving mechanism travels, it is not necessity to take the pitching/rolling of the moving mechanism 1 into the consideration, and there is a case where it is enough to suppress either one, i.e., the rolling or the pitching.

In the embodiment 1, the table 4 is attached on the car frame 2, being movable in two degrees of freedom, i.e., the pitch/roll directions; however, in the embodiment 2, the table 4 is attached thereon, being movable in either one direction, the pitch direction or the roll direction, by means of an actuator 31 of 1-degree of freedom.

Also, the control is executed along with the control block diagram shown in Fig. 4 and the flowchart shown in Fig. 5, in the similar manner to that of the embodiment 1; however in the flowchart shown in Fig. 5, it is enough to output the control instruction value for the either one, i.e., the pitch direction or the roll direction.

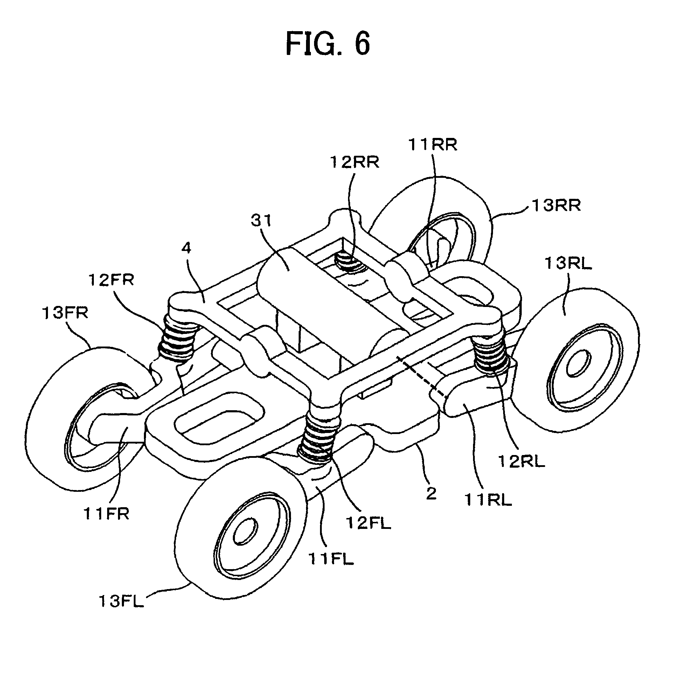

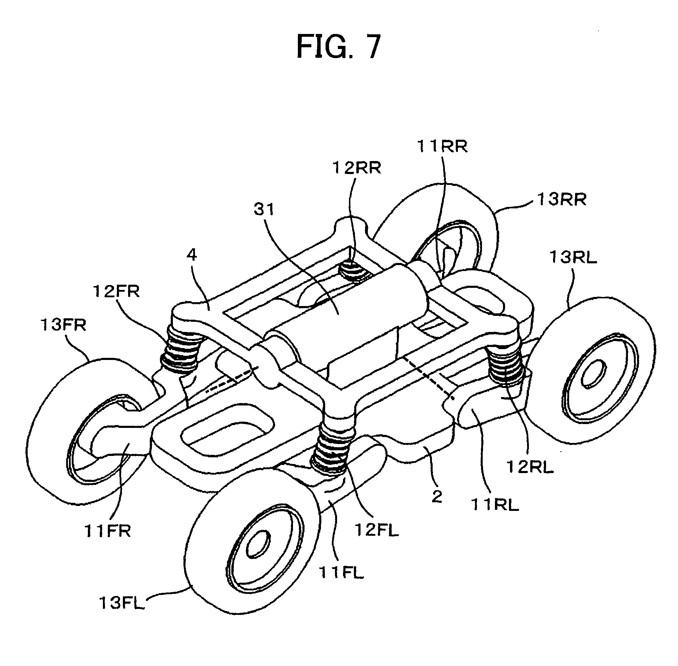

Figs. 6 and 7 are block diagrams of the moving mechanism 1, according to the embodiment 2.

The moving mechanism 1, as shown in Figs. 6 and 7, comprises four (4) pieces of swing arms 11 FL, 11 FR, 11 RL and 11 RR, at four corners of a car frame 2, each being able to rotate only into the pitch direction or the roll direction, and wheels 13FL, 13FR, 13RL and 13RR, at one ends of the swing arms 11 FL, 11 FR, 11 RL and 11 RR in the longitudinal direction thereof, respectively. In a middle of the longitudinal direction of the swing arms 11 FL, 11 FR, 11 RL or 11 RR are connected suspensions 12FL, 12FR, 12RL and 12RR, respectively, each having degrees of freedom in the pitch/roll directions, and the other ends of the suspensions 12FL, 12FR, 12RL and 12RR in the longitudinal direction thereof are suspended at the four (4) corners of the table 4, each having the degrees of freedom, the pitch/roll directions. The table 4 is attached around a central portion of the car frame 2, to be able to jolt only in one direction, i.e., the pitch direction or the roll direction (only in the pitch direction in Fig. 6, and only in the roll direction in Fig. 7), by means of the actuator 31 of 1-degree of freedom, at the position being nearly symmetric with, in the front and the rear and on the left and the right, and it operates in the similar manner to that described in embodiment 1.

According to the present invention, for example, within the moving mechanism of a moving body, having four wheels, it is characterized in that it comprises a spring and a damper between each tip of a foot and the wheel, for traveling on the uneven road surface with stability, and that it can adjust the position of each tip of the foot by bringing the position for suspending the spring to be variable by means of the actuator. Also, for example, the positions for suspending the springs are at the four corners of the table having the degrees of freedom of the pitch/roll directions, and the inclination of the table is changed while detecting the pitching/rolling of the car body, by means of a gyro sensor attached on the car body; thereby reducing the inclination of the car body. With such structures as mentioned above, it is possible to absorb small unevenness on the road surface by the spring suspension, and to cancel the inclination of the car body through driving in the pitch/roll directions by means of the table. It is also possible to deal with, not only the unevenness on the road surface, but also the inclination thereof, arbitrarily. Accordingly, it is possible to achieve an improvement of stability of a robot, being an autonomic moving body, and/or a vehicle, matching to an urban transportation having steps. The present method or system can be achieved by the actuator of 2-degrees of freedom (or the actuator of 1-degree of freedom, depending on cases). And, in a normal condition, it is possible that no electric power is needed by the actuator.

In the embodiment mentioned above, the mentioning was made in relation with the moving mechanism of four wheels; however, the present invention should not be limited only to that of the four (4) wheels, but it may be applied to the moving mechanism, the car frame thereof being supported by three or more numbers of the wheels, and moving by driving a part or all of the wheels mentioned above.

Also, for example, in Fig. 2 or 3 is shown an example of the case where the moving mechanism 1 is applied as the moving mechanism for the robot; however, the present invention should not be limited only to the robot, but it may be applied to the autonomic moving body for use of the urban transportation having steps.

It is also possible to apply the moving mechanisms, which are shown in Figs. 1, 6 and 7, as a truck for a vehicle running on rails. In such case, as the wheels 13FL, 13FR, 13RL and 13RR may be used metal wheels, each having a flange portion, in case where the rails are made of a metal. Also, in case where the rails are made of concrete, the wheels made of rubber may be applied. The vehicle has plural numbers of tracks, each having a wheel for running on the rails, and a compartment, which is provided on the plural numbers of trucks. This vehicle may be an electric train if the wheels of the tracks are driven by a motor.

However, the present invention should not be limited only to the embodiments mentioned above, but may include various modifications thereof. For example, the embodiments mentioned above are explained in details thereof, for the purpose of easy understanding of the present invention, but the present invention should not be limited, necessarily, only to that comprising all of the constituent elements mentioned above. It is also possible to replace a part of the constituent elements of a certain embodiment by that of other embodiment, or to add the constituent element(s) of the other embodiment to the constituent elements of the certain embodiment. Further, in relation with a part of the constituent elements of each embodiment, it is also possible to make addition/deletion/substitution of other constituent element(s).

Also, with each structure, function, processing portion, processing means, etc., which are mentioned above, a part or all of those may be achieved by, for example, hardware, through designing an integrated circuit, or so on. Or, each structure or function mentioned above may be achieved by software, through interpreting a program for achieving the respective functions by a processor, for example. Information of the program, a table(s) or a file(s), etc., for achieving each function, may be disposed in a recording device, such as, a memory, a hard disk, or a SSD (Solid Stage Drive), or on a recording medium, such as, an IC card, a SD card, a DVD, etc. Also, control lines or information lines are shown, as far as they can be considered necessary for the explanation; however, it is not always true that all of the control lines and the information lines necessary for products are shown therein. Actually, it can be considered that almost of all the constituent elements are connected with each other.

The present invention may be embodied in other specific forms without departing from the essential feature or characteristics thereof. The present embodiment are therefore to be considered in all respects as illustrative and not restrictive, the scope of the invention being indicated by the appended claims rather than by the forgoing description and range of equivalency of the claims are therefore to be embraces therein.

## Claims

1. A moving mechanism (1), comprising:
a car frame (2) supported by three (3) or more wheels (13FR, 13FL, 13RL, 13RR), movable by driving a part or all of said wheels (13FR, 13FL, 13RL, 13RR);
suspensions (12FR, 12FL, 12RL, 12RR), each of which is provided between said car frame (2) and each of said wheels (13FR, 13FL, 13RL, 13RR);
a table (4) being able to incline into a predetermined direction, to which said suspensions (12FR, 12FL, 12RL, 12RR) are suspended; and
an actuator (3; 31) having an output for inclining said table (4), wherein
an inclination detecting means, which is mounted on said car frame, detects an inclination angle and an inclination angular velocity of said moving mechanism with respect of a direction of gravity, and a control instruction value outputting means controls said actuator, upon basis of information thereof, in such that it follows a target inclination angle and a target inclination angular velocity of said moving mechanism,
**characterized in that**
said suspension is suspended to said table (4) and is connected with a part of a swing arm (11FR, 11FL, 11RL, 11RR) connecting between said car frame (2) and each of said wheels (13FR, 13FL, 13RL, 13RR), which can rotate in a pitch direction, and
said table (4) is able to incline in a pitch direction and/or a roll direction with respect to said car frame (2).

2. A vehicle, comprising:
Plural numbers of trucks, each of which has a wheel for running on rails; and
a compartment, which is provided on said plural numbers of trucks, wherein
each of said trucks is the moving mechanism as described in claim 1.

## Patentansprüche

1. Bewegungsmechanismus (1), der Folgendes aufweist:
einen Fahrzeugrahmen (2), der von drei (3) oder mehr Rädern (13FR, 13FL, 13RL, 13RR) getragen wird und durch Antreiben eines Teils der oder aller Räder (13FR, 13FL, 13RL, 13RR) bewegbar ist;
Federungen (12FR, 12FL, 12RL, 12RR), die jeweils zwischen dem Fahrzeugrahmen (2) und jedem der Räder (13FR, 13FL, 13RL, 13RR) vorgesehen sind;
einen Tisch (4), der sich in eine vorgegebene Richtung neigen kann und an dem die Federungen (12FR, 12FL, 12RL, 12RR) aufgehängt sind; und
einen Aktor (3; 31), der eine Ausgabe zum Neigen des Tisches (4) aufweist,
wobei eine Neigungserfassungseinrichtung, die an dem Fahrzeugrahmen angebracht ist, einen Neigungswinkel und eine Neigungswinkelgeschwindigkeit des Bewegungsmechanismus in Bezug auf die Richtung der Schwerkraft erfasst und wobei eine Einrichtung zur Ausgabe eines Steueranweisungswertes den Aktor auf der Grundlage dieser Information so steuert, dass er einem Sollwert des Neigungswinkels und einem Sollwert der Neigungswinkelgeschwindigkeit des Bewegungsmechanismus folgt,
**dadurch gekennzeichnet, dass**
die Federung an dem Tisch (4) aufgehängt ist und mit einem Teil eines Schwenkhebels (11FR, 11FL, 11RL, 11RR) verbunden ist, der eine Verbindung zwischen dem Fahrzeugrahmen (2) und jedem der Räder (13FR, 13FL, 13RL, 13RR) herstellt und sich in einer Pitch-Richtung drehen kann, und
der Tisch (4) in Bezug auf den Fahrzeugrahmen (2) zur Neigung in einer Pitch-Richtung und/oder einer Roll-Richtung befähigt ist.

2. Fahrzeug, das Folgendes aufweist:
mehrere Fahrgestelle, jedes mit Rädern zur Fortbewegung auf Schienen; und
einen Aufbau, der auf den mehreren Fahrgestellen vorgesehen ist,
wobei es sich bei jedem Fahrgestell um den Bewegungsmechanismus wie in Anspruch 1 beschrieben handelt.

## Revendications

1. Mécanisme mobile (1) comprenant :
un châssis de voiture (2) supporté par trois (3) roues ou plus (13FR, 13FL, 13RL, 13RR), déplaçable en entraînant une partie ou la totalité desdites roues (13FR, 13FL, 13RL, 13RR) ;
des suspensions (12FR, 12FL, 12RL, 12RR), qui sont chacune disposées entre ledit châssis de voiture (2) et chacune desdites roues (13FR, 13FL, 13RL, 13RR) ;
une table (4) inclinable dans un sens prédéterminé, à laquelle lesdites suspensions (12FR, 12FL, 12RL, 12RR) sont suspendues ; et
un actionneur (3 ; 31) ayant une sortie pour incliner la table (4), dans lequel
un moyen de détection d'inclinaison, qui est monté sur ledit châssis de voiture, détecte un angle d'inclinaison et une vitesse angulaire d'inclinaison dudit mécanisme mobile relativement à un sens de gravité, et un moyen de sortie de valeur d'instruction de commande commande ledit actionneur, en fonction d'informations de celui-ci, en ce qu'il suit un angle d'inclinaison cible et une vitesse angulaire d'inclinaison cible dudit mécanisme mobile,
**caractérisé en ce que**
ladite suspension est suspendue à ladite table (4) et est connectée à une partie d'un bras basculant (11FR, 11FL, 11RL, 11RR) se connectant entre ledit châssis de voiture (2) et chacune desdites roues (13FR, 13FL, 13RL, 13RR), qui peut tourner dans un sens de tangage, et
ladite table (4) est inclinable dans un sens de tangage et/ou un sens de roulis relativement audit châssis de voiture (2).

2. Véhicule comprenant :
plusieurs chariots, ayant chacun une roue pour rouler sur des rails ; et
un compartiment, lequel est disposé sur lesdits plusieurs chariots, dans lequel
chacun desdits chariots est le mécanisme mobile tel que décrit à la revendication 1.
